# EUROPEAN PATENT APPLICATION

(11) **EP 2 746 848 A1**
(43) Date of publication of application: **25.06.2014**
(21) Application number: 12199061.8
(22) Date of filing: 21.12.2012
(51) Int. Cl.: G03B 21/14, G03B 21/26, H04N 5/445, H05B 37/02

(54) **Ambient light projection device**

(71) Applicant: TP Vision Holding B.V., 5656 AE Eindhoven (NL)
(72) Inventor: Overes, Theodorus Franciscus Emilius Maria, 1097 JB Amsterdam (NL); Franke, Tom, 1097 JB Amsterdam (NL)
(74) Representative: Nederlandsch Octrooibureau

(57) **Abstract**

The invention relates to an ambient light projection device (1) for projection of ambient light around a first display device provided with a first screen (3) for showing an image. The ambient light projection device (1) comprises a light engine (4) arranged to generate a light beam (6), a modulation device (8) arranged to modulate the light beam (6) with ambient light information, a control unit (14) connected to the modulation device (8) and arranged to control the modulation device according to the ambient light information, and an optical system (9) arranged to project the modulated light beam (10) on a second screen (13). According to the invention the ambient light projection device (1) is provided with a optical beam divider (20, 24; 25) arranged to separate the modulated light beam (10) in a first sub light beam (11) and a second sub light beam (12) and a first optical element (20) arranged to project the first sub light beam (11) mainly on the second screen (13).

## Description

### Field of the invention

The invention relates to an ambient light projection device for projection of ambient light around a first display device.

### Background of the invention

Such an ambient light projection device is known from US2007126938 A1. The conventional ambient light projection device can be used with a television set to enhance the viewing experience of a viewer watching the television receiver. The known ambient light device comprises a light source for generation a light beam, a modulating device that controls the light source such that the light beam is modulated with ambient light information and a reflector to direct the modulated light beam to a surface or wall behind the television receiver.

The ambient light information can be derived from the image content of an image displayed on the television set. The conventional ambient light device can be integrated with the television receiver.

A drawback of the known television receiver is that the ambient light experience is rather limited.

### Summary of the invention

It is an object of the invention to provide an ambient light projection device with an enhanced viewing experience.

This object is achieved in an ambient light projection device for projection of ambient light around a first display device provided with a first screen for showing an image, the device comprising a light engine arranged to generate a light beam, a modulation device arranged to modulate the light beam with ambient light information, a control unit connected to the modulation device and arranged to control the modulation device according to the ambient light information, and an optical system arranged to project the modulated light beam, wherein the ambient light projection device is provided with a optical beam divider for separating the modulated light beam in a first sub light beam and a second sub light beam, and a first optical element arranged to project the first sub light beam mainly on a second screen. In this arrangement an ambient light image can be projected around the first display, for example, a television set. Ultra short throw projectors that are available in the market comprise the light engine, a modulation device and an optical system arranged to project the modulated light beam on the second screen. The ultra short throw projections can provide a high resolution ambient light around the first screen. Experiments have shown that this high resolution ambient light image improves the viewers' experience. Without the optical beam divider the modulated light beam may illuminate the first screen. By providing the optical beam divider the modulated light beam can be separated in a first sub light beam and a second sub light beam. The first optical element directs the first sub light beam to the second screen besides the first screen or television set. The second sub light beam can be used for displaying other information or can be absorbed.

In an embodiment of the ambient light projection device the first optical element can be further arranged to partly project the first sub light beam on the first screen. Ambient light of the first sub light beam can be partly projected on the first screen to obtain special effects for a viewer.

In a further embodiment the ambient light projection device is provided with a second optical element arranged for projecting the second sub light beam on a third screen. The second light beam can be used to display other information, for example, visual information of another application.

In a further embodiment the second optical element comprises a second mirror arranged to redirect the second sub light beam. The second mirror can project the second sub light beam for displaying the other information on the third screen. The third screen may comprise a front or rear projection screen.

In a further embodiment the optical beam divider comprises a first mirror provided with an aperture, wherein the first mirror is arranged to redirect the first sub light beam and the aperture is arranged to transfer the second sub light beam. In this arrangement the dimensions of the aperture prevents that the modulated light beam is projected on the first screen. The first sub light beam can mainly projected on the second screen and the second sub light beam that is passed through the aperture can be used for another application.

In a further embodiment the first optical element comprises the first mirror. The first mirror can be, for example, a convex or concave mirror. In this arrangement the ambient light projection device can be used as a rear- or front projector with limited resolution.

In an embodiment the first and second mirror are integrated in a facetted mirror device. In this arrangement a compact device can be obtained.

In another embodiment the optical beam divider comprises the second mirror positioned between the optical system and first optical element and arranged to redirect the second light beam. This configuration of the optical beam devider is an alternative to the beam divider comprising the first mirror provided with the aperture. In this alternative embodiment the dimensions of the second mirror are such that, the second mirror shields an area on the first mirror that can be equal to the area of the aperture in the first mirror. The second mirror prevents that the modulated light beam is proj ected on the first screen. The first optical element can project the first sub light beam on the second screen and the second mirror can redirect the second sub light beam to a third screen.

In an embodiment the modulation device is arranged to modulate a first part of the light beam corresponding to the first separated light beam with the ambient light information. In this arrangement the energy of the light source can be concentrated in the first sub light beam.

In a further embodiment the modulation device is arranged to modulate a second part of the light beam corresponding to the second sub light beam with other image information. By modulation of the second sub light beam the second sub light beam can be used in a second display for example on the third screen.

In a further embodiment the ambient light projection device is provided with a beam dump for absorbing the second sub light beam. The beam dump can be integrated in the optical beam divider and can absorb the second sub light beam if that is not required to display a further image.

In a further embodiment of the ambient light projection device the third screen is arranged to partially overlap the second screen. For example, the third screen can be projected on top of the second screen.

The invention further relates to an assembly of an ambient light projection device according to any of the claims 1-11 and a TV-set.

### Brief description of drawing

The above and other, more detailed aspects of the invention will be elucidated and described hereinafter, by way of example, with reference to the accompanying drawings.
Therein:
Fig. 1 shows a embodiment of an ambient light projection device according to the invention;
Fig. 2 show diagrammatically a second embodiment of an ambient light projection device;
Fig. 3 show diagrammatically a third embodiment of an ambient light projection device;
Fig. 4 shows a schematically a projection of a top view of an integrated cone shape facetted mirror; and
Fig. 5 shows an embodiment of an ambient light projection device provided with a beam dump.

### Detailed description of embodiments

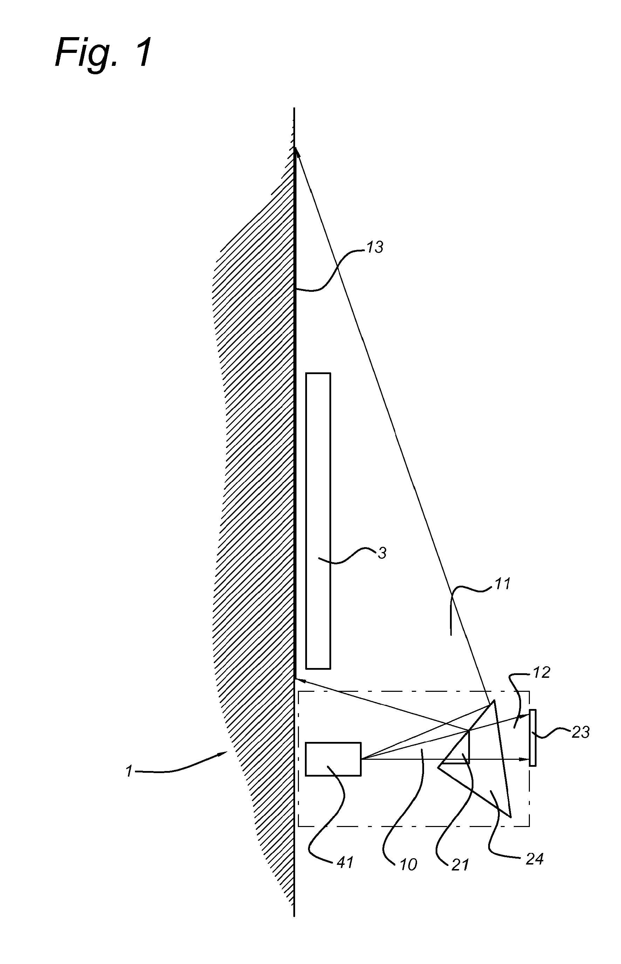

In the drawing equal reference signs represent like parts. Fig. 1 shows an embodiment of an ambient light projection device 1 according to the invention for projection of ambient light around a first display device , for example a TV-set provided with a first screen 3 for showing an image. The first screen 3 may comprise an LCD screen, a PDP screen or an OLED screen.

The ambient light projection device1 can comprise a projection engine 41 for generation of a light beam and for modulating a light beam with ambient light information corresponding to the image.

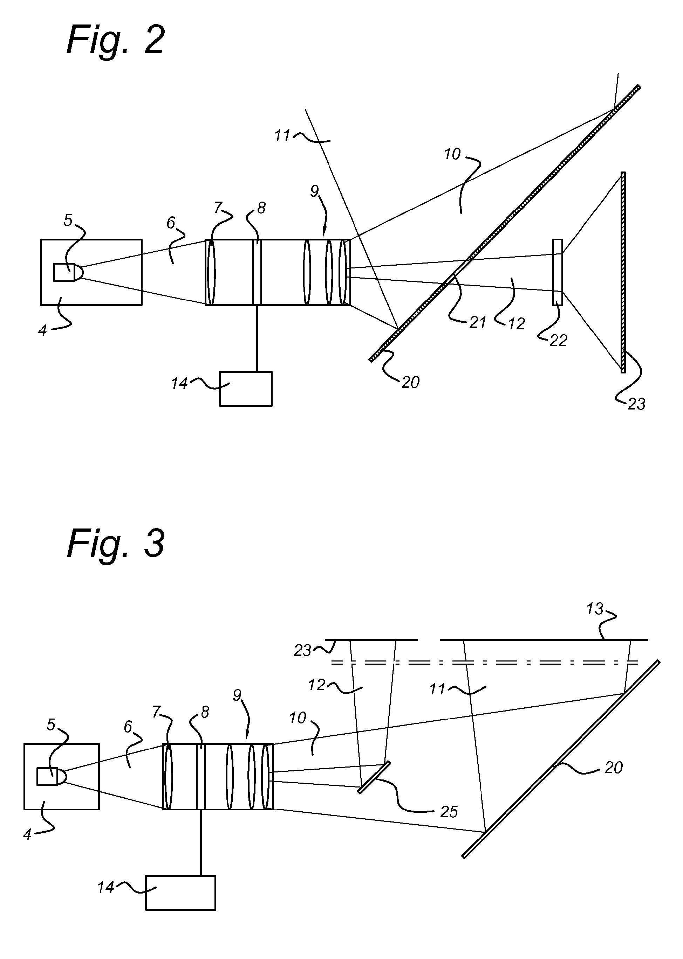

Fig. 2 shows diagrammatically a configuration of the ambient light projection device 1. The ambient light projection device 1 comprises a light engine 4, a collimating lens system 7, a modulation device 8 and an optical system 9. The light engine 4 may comprise a UHP lamp 5 or high brightness LEDs. The modulation device 8 can be a transparent or reflective LCD device, LCOS device or a DMD device. The ambient light projection device 1 further comprises a control unit 14 connected to the modulation device 8 and arranged to control the modulation device to modulate the light beam 6 according to the ambient light information. Furthermore, the optical system 9 is arranged for projecting the modulated light beam 10 on a second screen 13, (not shown in Fig.2) for example a part of a wall behind the first screen 3 as shown in Fig. 1. The light engine 4, the collimating lens system 7, the modulation device 8 and the optical system 9 can be integrated in the projection engine 41 as shown in Fig. 1. The ambient light projection device 1 is further provided with a optical beam divider positioned in an optical path between the optical system 9 and the first screen 3 for separating the modulated light beam 10 in a first sub light beam 11 and a second sub light beam 12 and a first optical element, for example, a first mirror 20 arranged to redirect the first sub light beam 11 to the second screen 13. In this embodiment the optical beam divider comprises the mirror 20 which is provided with an aperture 21 The aperture 21 is arranged to transfer the second sub light beam 12. The dimensions of the aperture 21 can be selected such that the first sub light beam 11 is mainly projected on a second screen 13 besides the LCD screen 3.

In an embodiment the dimension of the aperture can also selected such that the first sub light beam 11 is partly projected on the first screen 3.
In an embodiment the optical beam divider can be a convex mirror 24 , for example, a conical or cone shaped mirror provided with the aperture 21 arranged to transfer the second sub light beam 12 to the third screen 23 as shown in Fig.1.

In an embodiment the ambient light projection device is provided with a second optical element 22 positioned between the optical beam divider and a third screen 23 and arranged to project the second sub light beam 12 on the third screen 23. In an embodiment the third screen 23 can be a part of a rear projection screen 3., wherein the third screen can be located besides the first screen 3. In an embodiment the third screen 23 can partially overlap the second screen 13.

Furthermore, the second optical element can comprise a further mirror (not shown) for redirecting the second sub light beam 12 to the third screen 23.

Furthermore, in an embodiment the ambient light projection device may comprise a folding mirror in the light path of the first sub light beam between the first mirror 20 and the second screen 13 to obtain a more compact arrangement.

In an embodiment the third screen 23 can be a part of the second screen 13, in this embodiment the second optical element 22 or a facetted mirror redirects the second sub light beam to the second screen 13.
In an embodiment the first and second mirror are integrated in a facetted mirror device.

Fig. 3 shows an second embodiment of the ambient light projection device according to the invention. The ambient light projection device comprises a UHP lamp 5 or high brightness LEDs, a collimating lens system 7 and a modulation device 8 and an optical system 9 as explained in the embodiment with respect to Fig. 1 and 2 . Furthermore, the ambient light projection device is provided with a beam divider positioned in an optical path between the optical system 9 and the first screen 3 for separating the modulated light beam 10 in a first sub light beam 11 and a second sub light beam 12 and a first optical element, for example, a first mirror 20 arranged to redirect the first sub light beam 11 to the second screen 13. In this embodiment the optical beam divider comprises a second mirror 25 positioned between the optical system 9 and the first mirror 20. The second mirror 25 is arranged to redirect the second light beam 12 away from the first mirror 20, for example towards the third screen 23. The dimensions of the second mirror 25 can be selected such that a part of the first mirror 20 is shielded and the first sub light beam 11 is mainly projected on a second screen 13 besides the screen 3. The first mirror 20 can also be arranged that the first sub light beam 11 is partly projected on the first screen 3.

In the embodiments described above the control device 14 can be arranged to modulate a first part of the light beam corresponding to the first sub light beam 11 with the ambient light information. For example, the ambient light information can be derived from the image information displayed on the first screen 3. The control device 14 can be further arranged to modulate a second part of the light beam corresponding to the second sub light beam 12 with other image information. This other image information can be, for example, a clock or timer.
In an embodiment the first mirror can be a convex or concave mirror 24 , for example, a conical or cone shaped mirror as is shown in Fig. 1.

In a further embodiment the optical beam divider 20 can be provided with a beam dump for absorbing the second sub light beam 12.

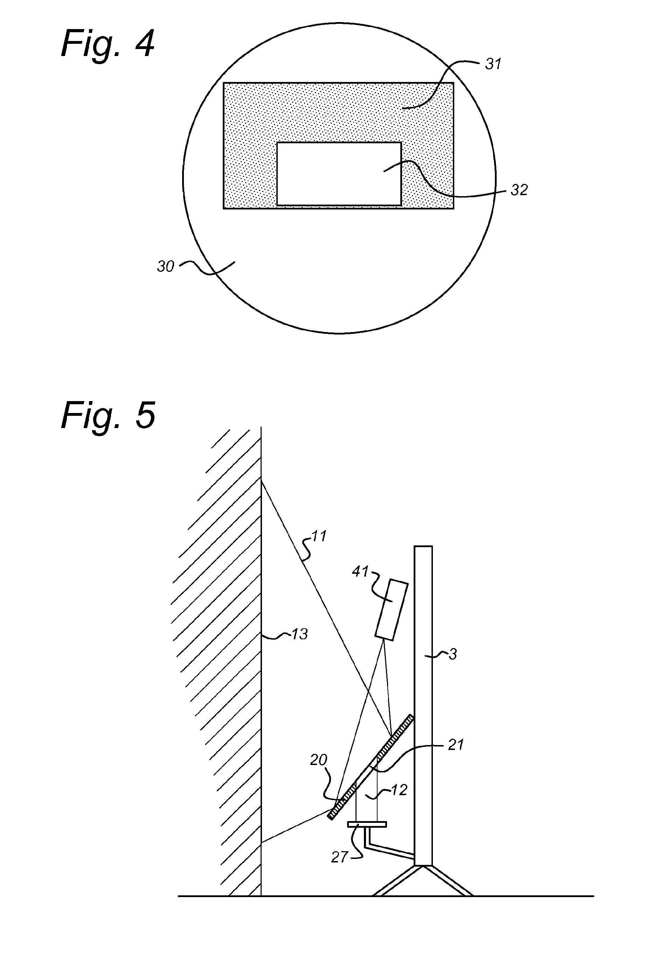

Fig. 4 shows a projection of a front view of an integrated cone shape facetted mirror 30 wherein a first rectangle 31 represents a first area that reflects the first sub light beam and a second rectangle 32 represents a second area that reflects the second sub light beam. In an embodiment the second rectangle can be an aperture.

Fig. 5 shows an embodiment of an ambient light projection device 1, wherein the UHP lamp or LED lamp 5, the collimating lens system 7 and the modulation device 8 and one or more lenses 9 of the optical system are integrated in the single projection device 41. The first mirror 20 is provided with the aperture 21 as described above.

The projection engine 41 is positioned, seen from the viewpoint of a viewer looking to a front side of the screen 3, at the top of the back side of the screen 3. The first mirror 20 is arranged to direct a first modulated sub light beam from the projection device 41 to the second screen 13. Furthermore, the first mirror 20 is positioned behind the first screen 3. The first mirror 20 is provided with the aperture 21 arranged to transfer the second sub light beam 12 to a beam dump 27, for example, a light absorbing surface.

It should be noted that the above-mentioned embodiments illustrate rather than limit the invention, and that those skilled in the art will be able to design many alternative embodiments without departing from the scope of the appended claims.

## Claims

1. Ambient light projection device (1) for projection of ambient light around a first display device provided with a first screen (3) for showing an image, the device comprising
a light engine (4) arranged to generate a light beam,
a modulation device (8) arranged to modulate the light beam with ambient light information,
a control unit (14) connected to the modulation device (8) and arranged to control the modulation device according to the ambient light information, and
an optical system (9) arranged to project the modulated light beam (10) on a second screen (13), wherein the ambient light projection device is provided with an optical beam divider (20,24;25) arranged to separate the modulated light beam (10) in a first sub light beam (11) and a second sub light beam (12), and a first optical element (20) arranged to project the first sub light beam mainly on the second screen (13).

2. Ambient light projection device according to claim 1, wherein the first optical element (20) is further arranged to partly project the first sub light beam (11) on the first screen (3).

3. Ambient light projection device according claim 1 or 2, wherein the ambient light projection device is provided with a second optical element (22) arranged to project the second sub light beam (12) on a third screen (23).

4. Ambient light projection device according to claim 3, wherein the second optical element comprises a second mirror (25) arranged to redirect the second sub light beam (12).

5. Ambient light projection device according to claim 3 or 4, wherein the third screen (23) comprises a rear or front projection screen.

6. Ambient light projection device according to any of the claims 1-5, wherein the optical beam divider comprises a first mirror provided (20, 24) with an aperture (21), wherein the first mirror (20,24) is arranged to redirect the first sub light beam (11), and the aperture (21) is arranged to transfer the second sub light beam (12).

7. Ambient light projection device according to claim 6, wherein the first optical element (21) comprises the first mirror (20,24).

8. Ambient light projection device according to claim 6 or 7, wherein the first mirror comprises a convex or concave mirror.

9. Ambient light projection device according to claim 8 and 4, wherein the first and second mirror are integrated in a facetted mirror device.

10. Ambient light projection device according to claim 4, wherein the optical beam divider (25) comprises the second mirror (25), which is positioned between the optical system (9) and the first optical element (20) and arranged to redirect the second sub light beam 12.

11. Ambient light projection device according to any of the claims 1-10, wherein the control device (14) is arranged to modulate a first part of the light beam (10) corresponding to the first sub light beam (11) with the ambient light information.

12. Ambient light projection device according to any of the claims 1-11, wherein the control device (14) is arranged to modulate a second part of the light beam corresponding to the second sub light beam (12) with other information.

13. Ambient light projection device according to claim 1, wherein the ambient light projection device is provided with a beam dump (27) for absorbing the second sub light beam.

14. Ambient light projection device according to any of the claims 1-13, wherein the third screen (23) is arranged to partially overlap the second screen (13).

15. Assembly of an ambient light projection device (1) according to any of the claim 1-14 and a TV-set.
